# EUROPÄISCHE PATENTANMELDUNG

(11) **EP 4 485 758 A1**
(43) Veröffentlichungstag der Anmeldung: **01.01.2025**
(21) Anmeldenummer: 23182129.9
(22) Anmeldetag: 28.06.2023
(51) Int. Cl.: H02K 3/493, H02K 15/00, H02K 15/12

(54) **NUTFÜLLUNG MITTELS THERMOPLAST-COMPOUND EINER ELEKTRISCHEN MASCHINE**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Ein Nutverschluss einer Wicklungsnut einer elektrischen Maschine soll effizient hergestellt werden. Dazu wird ein viskoses Nutverschlussmaterial bereitgestellt (S5, S6), in dessen thermoplastische Kunststoffmatrix magnetisierbare Partikel eingemischt sind. Das viskose Nutverschlussmaterial wird in die Nut der elektrischen Maschine appliziert (S7). Schließlich erfolgt ein Abkühlen (S8) des viskosen Nutverschlussmaterials in der Nut, wodurch das Nutverschlussmaterial in der Nut aushärtet.

## Beschreibung

Die vorliegende Erfindung betrifft ein Verfahren zum Füllen einer Nut einer elektrischen Maschine. Darüber hinaus betrifft die vorliegende Erfindung eine entsprechende Vorrichtung zum Füllen einer solchen Nut.

Niederspannungsmotoren werden typischerweise mit einer Runddraht-Wicklung hergestellt, welche im Voraus über einen Flyer-/Schablonenwickler zu Spulen gewickelt werden und im Anschluss vollautomatisiert in das mit den jeweiligen Nuten versehene Blechpaket eingezogen werden. Hierbei ist die kritische Stelle immer der Nutspalt, welcher durch die zwei benachbarten Nutzähne definiert wird. Dieser ist deutlich kleiner als die Nut an sich, wodurch sich wünschenswerterweise die Magnetkreise effektiver schließen, jedoch die gesamte Kupferwicklung durch diese Querschnitt-/Verjüngung gezogen werden muss. Um ideale Magnetfeldeigenschaften im Blechpaket zu generieren, müsste der Nutspalt derart schmal gewählt werden, dass die Nutspaltbreite kleiner als der Durchmesser eines Einzeldrahtes der Wicklung ist. Dies würde jedoch fertigungstechnisch zu großen Problemen führen, da keine typischen Wickel-Einziehverfahren mehr verwendet werden können. Die aktuellen Blechgeometrien sind hierbei eine Art Kompromiss, der beide Notwendigkeiten einbezieht. Der Nutspalt hat ca. die lichte Breite von zwei bis vier Einzeldrähten (Durchmesser), wodurch durch eine geeignete Lamellenführung beim Einzug das Kupferbündel auf diese Breite partiell komprimiert wird und der Nachteil in Bezug auf die Magnetkreisdimensionierung akzeptabel bleibt.

Insbesondere bei größeren Maschinen (Mittelspannungs- oder Hochspannungsmotoren) mit höheren Anforderungen wird der vorhandene Nutspalt im Anschluss mittels eines magnetischen Nutverschlusses verschlossen. Hierbei handelt es sich um magnetische Eisenpartikel verschiedenster Ausführungen, welche meist im Zusammenspiel mit einem Kunststoff als "Compound" vorliegen. Dieser "Compound" (Füllstoffpartikel = Eisen, Matrix = Kunststoff) wird oftmals vorgefertigt und als Nutkeile, welche mechanisch eingeschoben werden, verwendet. Dies hat den Nachteil, dass sich der Nutverschluss im laufenden Betrieb der Maschine aufgrund von Vibrationen und auftretenden Kräften lockern und lösen kann und damit den Läufer blockiert und somit zum Ausfall der Maschine führt.

Zum anderen sind vorgefertigte Nutspalte keine wirtschaftliche Lösung für ein variantenreiches Produktportfolio, wie dies oftmals im Bereich der Niederspannungsmotoren vorliegt.

Eine andere Anwendungsform bei Mittel- und Hochspannungsmaschinen ist die Nutzung einer noch unvernetzten, hochgefüllten Paste, bestehend aus Eisenfüllstoffpartikeln und chemischem Reaktivharz (Mischungsverhältnis ca. 90 Gewichtsprozent Eisenfüllstoff, 10 Gewichtsprozent polymere Matrix). Die Masse muss hierbei unter aktiver Kühlung mehrere Stunden geknetet werden, um eine Homogenisierung der Partikel in der Matrix sicherzustellen und dann gekühlt gelagert und transportiert werden, da es sich um eine einkomponentige, reaktive Masse handelt. Die Matrixkomponente ist beispielsweise ein anhydritisch gehärtetes Epoxidharz, welches unter Zuführung höherer Temperatur (150°C, mehrere Stunden) zu einem Formstoff härtet, welcher ausreichend mechanische Festigkeit aufweist und eine Glasübergangstemperatur von über 140°C besitzt, wodurch die Anforderungen der Mittelspannungs- und Hochspannungsmaschinen an das Isoliersystem und die Peripherie erfüllt sind. Aufgrund der Wahl der Matrix und der Eisenfüllstoffzusammensetzung als auch aufgrund der hohen mechanischen Anforderungen an den Endformstoff sowie beim Applizieren sind zusätzliche Additive, wie z.B. Talkum (als Schmierstoff) und Polymerfasern (als Armierung der Masse und Thixotropierung beim Verarbeiten) im einstelligen Gewichtsprozentbereich notwendig. Die Einbringung des Materials geschieht bei Raumtemperatur entweder händisch ("einspachteln") oder durch einen (teil-)automatisierten Raupenauftrag und anschließendem Einpressen mittels einer speziellen Rakel. Die thermische Härtung wird im Anschluss durch einen Heißluftofen beziehungsweise durch die Bestromung der Wicklungen herbeigeführt.

Die Aufgabe der vorliegenden Erfindung besteht darin, eine wirtschaftliche und energiearme Möglichkeit für die Nutfüllung insbesondere bei Niederspannungsmaschinen vorzuschlagen.

Erfindungsgemäß wird diese Aufgabe durch ein Verfahren und eine Vorrichtung entsprechend den unabhängigen Ansprüchen gelöst. Vorteilhafte Weiterbildungen der Erfindung ergeben sich aus den Unteransprüchen.

Der Erfindung liegt die Erkenntnis zugrunde, dass Niederspannungsmotoren, die eine hohe Effizienz aufweisen, nur sehr geringe Leistungsverluste haben, welche sich in einer Erwärmung des Rotors und des Stators manifestieren, wodurch insbesondere im Bereich eines möglichen Nutverschlusses eine Temperatur von über 100°C nahezu ausgeschlossen ist. Dies erlaubt eine neue Sichtweise auf die thermische Stabilität des Isoliersystems und dessen Peripherie. Insbesondere die Peripherie (z.B. der Deckschieber) kann deutlich unterhalb der sonst für das Primärisoliersystem geforderten Wärmeklasse F/H (155°/180°C, 20000 h) liegen, ohne die Lebensdauer oder die Leistungsfähigkeit der Maschine negativ zu beeinflussen.

Aufgrund dieser Entwicklung wird erfindungsgemäß eine alternative Polymerlösung für die Nutfüllung vorgestellt, welche sich als wirtschaftliche und zugleich CO₂-freundliche Lösung (hinsichtlich Applikation und Prozess) insbesondere für Niederspannungsmotoren darstellt.

Erfindungsgemäß wird ein Verfahren zum Füllen einer Nut einer elektrischen Maschine bereitgestellt. Bei der Nut handelt es sich insbesondere um eine Wicklungsnut, in die eine Wicklung beziehungsweise Spule eingezogen werden kann. Die Nut ergibt sich typischerweise in einem Blechpaket eines magnetisch aktiven Teils der elektrischen Maschine. Bei der elektrischen Maschine kann es sich beispielsweise um einen Motor, einen Generator, einen Transformator und dergleichen handeln.

Bei dem Verfahren erfolgt ein Bereitstellen eines (ausgehärteten oder geschmolzenen) Nutverschlussmaterials, in dessen thermoplastische Kunststoffmatrix magnetisierbare Partikel eingemischt sind. Das Nutverschlussmaterial steht also als eigenes Produkt vor der Verarbeitung bereit. Beispielsweise wird es als Granulat oder in einer anderen Form zur Verfügung gestellt. Jedenfalls liegt das Nutverschlussmaterial in ausgehärteter, d.h. fester Form vor. Das Nutverschlussmaterial besitzt eine thermoplastische Kunststoffmatrix mit magnetisierbaren Partikeln. Die magnetisierbaren Partikel sind vorzugsweise möglichst homogen in der Kunststoffmatrix verteilt. Speziell können ferromagnetische Partikel und insbesondere ein Eisenpulver für die magnetisierbaren Partikel verwendet werden. Es ergibt sich damit ein sogenanntes "Compound" bestehend aus einer Matrix aus Kunststoff und Füllstoffpartikeln (z.B. Eisen). Anstelle von Eisen können für die magnetisierbaren Partikel auch andere ferromagnetische Metalle oder Legierungen verwendet werden.

Bei Bereitstellung von ausgehärtetem beziehungsweise festem Nutverschlussmaterial erfolgt ein Schmelzen des Nutverschlussmaterials. Das Nutverschlussmaterial (Compound) wird dabei auf eine Temperatur erwärmt, die eine geeignete Verarbeitung ermöglicht. Aus Effizienzgründen sollte die Temperatur natürlich nicht wesentlich höher sein, als es für das Verarbeiten notwendig ist. Nach dem Schmelzen ist das zuvor feste Nutverschlussmaterial viskos, also zähflüssig.

In einem weiteren Schritt erfolgt ein Applizieren des geschmolzenen beziehungsweise viskosen Nutverschlussmaterials in die Nut der elektrischen Maschine. Üblicherweise befindet sich hierzu die jeweilige Wicklung beziehungsweise Spule bereits in der Nut, sodass das geschmolzene Nutverschlussmaterial auf das jeweilige Drahtbündel beziehungsweise den Deckschieber aufgebracht wird. Dabei sollte eine derartige Menge an Nutverschlussmaterial in die Nut eingebracht werden, die letztlich einen passenden Nutverschluss nach Aushärtung darstellen kann.

In einem weiteren Verfahrensschritt ist ein Abkühlen des geschmolzenen beziehungsweise viskosen Nutverschlussmaterials in der Nut vorgesehen, wodurch das Nutverschlussmaterial in der Nut aushärtet. Nach dem einmaligen Erwärmen des Nutverschlussmaterials kann dieses in der Nut auskühlen. Eine weitere Wärmezufuhr ist also nicht notwendig, da eine thermoplastische Kunststoffmatrix verwendet wird.

In vorteilhafter Weise kann so ein einfaches Verfahren zum Füllen einer Nut einer elektrischen Maschine bereitgestellt werden, welches besonders energieeffizient ist.

In einem Ausführungsbeispiel ist vorgesehen, dass es sich bei der Kunststoffmatrix um einen Polyolefin-Schmelzkleber handelt. Polyolefine sind Polymere, die aus Alkenen wie Äthylen, Propylene, 1-Buten oder Isobutenen durch Kettenpolymerisation hergestellt werden. Insbesondere handelt es sich dabei um teilkristalline Thermoplaste, die sich leicht verarbeiten lassen und die gute elektrische Isoliereigenschaften zeigen. Schmelzkleber beziehungsweise Schmelzklebstoffe (auch Heißklebstoffe genannt), sind lösungsmittelfrei und bei Raumtemperatur mehr oder weniger feste Produkte, die im heißen Zustand als viskose Flüssigkeit vorliegen. Beim Abkühlen verfestigen sie sich reversibel und können eine feste Verbindung zwischen den angrenzenden Komponenten herstellen. Ein Polyolefin-Schmelzkleber besitzt also für elektrische Maschinen vorteilhafte Eigenschaften und ist einfach verarbeitbar.

Alternativ kann für die Kunststoffmatrix auch ein Polyamid-Schmelzkleber und insbesondere ein Polyamid-6-Schmelzkleber verwendet werden. Polyamide sind lineare Polymere mit regelmäßig wiederholenden Amidbindungen. Sie besitzen eine hervorragende Festigkeit und Zähigkeit sowie eine gute chemische Beständigkeit gegenüber organischen Lösungsmitteln. Die Polyamide sind ebenfalls thermoplastische Kunststoffe. Das Polyamid-6 ist auch unter der Bezeichnung Polycaprolactam bekannt. Polyamid-6 ist für seine Zähigkeit und Verschleißfestigkeit bekannt. Das Polyamid kann wiederum als Schmelzkleber mit den oben genannten Eigenschaften verwendet werden.

In einem weiteren Ausführungsbeispiel ist vorgesehen, dass in dem Nutverschlussmaterial beziehungsweise dem Compound 75 bis 90 Gewichtsprozent magnetisierbare Partikel, insbesondere ferromagnetische Partikel (z.B. Eisenpulver), eingemischt sind. Der hohe Gewichtsanteil der magnetisierbaren Partikel führt zu einem hocheffizienten Nutverschluss.

Weiterhin kann vorgesehen sein, dass das Applizieren des geschmolzenen Nutverschlussmaterials in die Nut der elektrischen Maschine durch Extrudieren oder Spritzgießen erfolgt. Es können somit bewährte Standardmethoden für das Applizieren des Nutverschlussmaterials Verwendung finden.

Speziell kann das Applizieren des Nutverschlussmaterials durch einen Einschneckenextruder oder eine Applikationspistole erfolgen. Aufgrund des verwendeten Compound-Materials mit Kunststoffmatrix und Füllstoff ist es nicht notwendig, beim Applizieren Komponenten zu mischen. Vielmehr kann ein einfacher Einschneckenextruder für das Applizieren des Nutverschlussmaterials verwendet werden. Ähnliches gilt für die Applikationspistole. Für die Applikation reicht es prinzipiell, eine sogenannte "Heißklebepistole" zu verwenden, die die thermoplastische Kunststoffmatrix schmilzt.

Gemäß einem weiteren Ausführungsbeispiel ist vorgesehen, dass das Nutverschlussmaterial aus einem Granulat geschmolzen wird. Das Nutverschlussmaterial beziehungsweise Compound liegt damit granular vor und jedes Korn enthält die Mischung aus Kunststoffmatrix und (Eisen-)Füllstoff. Es bedarf damit keiner weiteren Mischung.

Gemäß einer weiteren vorteilhaften Ausführungsform erfolgt ein Schmelzen des Nutverschlussmaterials unmittelbar vor dem Applizieren. Beispielsweise erfolgt das Schmelzen in dem Extruder beziehungsweise der Applikationspistole und das geschmolzene Nutverschlussmaterial wird sogleich in die Nut appliziert. Dies hat den Vorteil, dass das geschmolzene Nutverschlussmaterial nicht über längere Zeit viskos gehalten werden muss. Somit kann Energie eingespart werden.

Gemäß einem weiteren Ausführungsbeispiel ist vorgesehen, dass bei dem Applizieren des viskosen beziehungsweise geschmolzenen Nutverschlussmaterials in die Nut der elektrischen Maschine ein viskoser Strang aus dem Nutverschlussmaterial auf ein Drahtbündel in der Nut aufgebracht wird. Der viskose Strang stellt eine pastöse "Raupe" dar, die aus der Compound-Paste gebildet wird. Der viskose Strang wird in der Regel indirekt auf das Drahtbündel aufgebracht. Insbesondere wird er auf einen Deckschieber appliziert, der das Drahtbündel zur Nut hin abdeckt. In vorteilhafter Weise kann somit die Nut durch das Nutverschlussmaterial verschlossen werden.

Bei einer besonders vorteilhaften Ausführungsform wird das Drahtbündel unmittelbar vor dem Applizieren des viskosen Strangs in Richtung Nutgrund gedrückt. Insbesondere kann der auf dem Drahtbündel vorgesehene Deckschieber nach unten zum Nutgrund gedrückt werden, wodurch indirekt auch das Drahtbündel zum Nutgrund gedrückt wird. Durch das Niederdrücken entsteht zusätzlicher Raum zwischen Drahtbündel beziehungsweise Deckschieber und Nutöffnung, der durch das Nutverschlussmaterial zumindest teilweise gefüllt werden kann.

In einer Weiterentwicklung kann vorgesehen sein, dass sich nach dem Applizieren des viskosen Strangs das Drahtbündel in der Nut entspannt und dabei ein Teil des Strangs zur Bildung eines Formschlusses hinter einen Nutvorsprung gedrückt wird.

Beispielsweise wird bereits beim Applizieren des viskosen Strangs ein Teil von ihm in den Hinterschnitt der Nut gebracht. Falls sich nun das Drahtbündel nach dem Eindrücken entspannt, drückt es den Teil des viskosen Strangs im Hinterschnitt weiter in diesen hinein. Damit kann nach dem Aushärten des Nutverschlussmaterials ein Formschluss in der Nut erzielt werden.

In einem weiteren Ausführungsbeispiel ist vorgesehen, dass der viskose Strang nach dem Einbringen in die Nut oberflächenbündig abgezogen und/oder mit einer Heizeinrichtung geglättet wird. Das Abziehen des viskosen Strangs kann beispielsweise mit dem Applikationswerkzeug oder aber mit einem separaten Abziehwerkzeug erfolgen. Zur Glättung der Oberfläche kann eine Heizeinrichtung wie etwa eine Infrarotlampe verwendet werden. Durch sie wird das Nutverschlussmaterial zumindest oberflächlich angeschmolzen und die Oberflächenspannung wird zur Glättung ausgenutzt.

Die obige Aufgabe wird erfindungsgemäß auch gelöst durch eine Vorrichtung zum Füllen einer Nut (Wicklungsnut) einer elektrischen Maschine, wobei
- eine Schmelzeinrichtung ausgebildet zum Schmelzen eines Nutverschlussmaterials, in dessen thermoplastische Kunststoffmatrix magnetisierbare Partikel eingemischt sind,
- eine Applikationseinrichtung ausgebildet zum Applizieren des geschmolzenen beziehungsweise viskosen Nutverschlussmaterials in die Nut der elektrischen Maschine und zum Abkühlenlassen des geschmolzenen Nutverschlussmaterials in der Nut, wodurch das Nutverschlussmaterial in der Nut aushärtet.

Die Schmelzeinrichtung kann auch in die Applikationseinrichtung integriert sein. Die Applikationseinrichtung ist in der Lage, beispielsweise die oben genannte pastöse Raupe auf den Deckschieber in der Nut zu applizieren.

Die oben im Zusammenhang mit dem erfindungsgemäßen Verfahrenen geschilderten Vorteile und Varianten gelten sinngemäß auch für die erfindungsgemäße Vorrichtung. Dabei können die einzelnen Verfahrensmerkmale als funktionelle Merkmale der Vorrichtung gesehen werden.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:
- FIG 1: eine Nut einer elektrischen Maschine gefüllt mit einem Drahtbündel;
- FIG 2: die Nut von FIG 1 mit eingepresstem Drahtbündel;
- FIG 3: die Nut mit applizierter Nutverschlussmasse;
- FIG 4: die Nut mit verschlossenem Nutschlitz;
- FIG 5: die Applikation der Nutverschlussmasse in Nutlängsrichtung; und
- FIG 6: einen schematischen Verfahrensablauf.

Die nachfolgend geschilderten Ausführungsbeispiele stellen bevorzugte Ausführungsformen der vorliegenden Erfindung dar.

Die Tatsache, dass insbesondere Niederspannungsmotoren sehr effizient betrieben werden können und der Nutverschluss kaum Temperatur über 100°C erreicht, wird dazu genutzt, den Nutverschluss mittels eines Thermoplast-Compounds herzustellen, das eine thermoplastische Kunststoffmatrix mit einem Füllstoff aus magnetisierbaren Partikeln besitzt.

In einer konkreten Ausgestaltung wird die polymere Matrix unabhängig von der Zusammensetzung und der gegebenenfalls Optimierung der Partikelgrößenverteilung des Eisenfüllstoffs durch eine vom Stand der Technik abweichende substituiert. Aufgrund der deutlich kleineren Nutspalte (ca. 2 bis 5 mm im Vergleich zu größeren Maschinen mit ca. 2 cm) ist eine Zugabe von Polymerfasern zur Armierung nicht notwendig. Unabhängig von anderen Merkmalen soll also zumindest eine Ausführungsform darauf beruhen, dass die thermoplastische Matrix keine Polymerfasern aufweist. Für die Applikation der thermoplastischen Schmelze kann somit auf übliche Teilsysteme zurückgegriffen werden, da keine "hochscherende/hochviskose" Komponente zum thermoplastischen Kunststoff hinzugegeben wird, was die vollautomatisierte Förderung und Einbringung sehr schwierig gemacht hätte.

Erfindungsgemäß wird daher zum Füllen einer (Wicklungs-)Nut einer elektrischen Maschine ein Compound aus einer thermoplastischen Kunststoffmatrix und einem Füllstoff mit magnetisierbaren Partikeln (z.B. Eisenpulver) verwendet. Praktikabel ist beispielsweise eine Compoundierung des Füllstoffs (z.B. Eisenpulver) zu 75 bis 90 Gewichtsprozent beispielsweise in eine Polyolefin-Schmelzkleber- oder Polyamid-6-Schmelzkleber-Matrix. Polyolefin ist hierbei aufgrund seiner niedrigeren Schmelz- und Verarbeitungstemperatur (Schmelztemperatur zirka 140 Grad Celsius, Verarbeitungstemperatur 200 Grad Celsius) zu bevorzugen, sofern die mechanischen Eigenschaften im Betrieb des Motors beziehungsweise der elektrischen Maschine (Erweichung unter 100 Grad Celsius) ausreichen.

Die Compoundierung von (Eisenpulver-)Füllstoff und thermoplastischer Kunststoffmatrix kann unabhängig von der Verschließung von Nuten oder unmittelbar davor erfolgen. Erfolgt die Compoundierung unmittelbar vor der Verschließung einer Nut, muss das Compound nicht zweimal aufgeschmolzen werden. Andernfalls, wenn die Compoundierung unabhängig von dem Verschluss der Nut erfolgt, wird das Nutverschlussmaterial beispielsweise zu Granulat (für Extrusion) oder zu Stäben (für Applikationspistolen) als Zwischenprodukt verarbeitet. In diesem Fall muss das Nutverschlussmaterial beziehungsweise Zwischenprodukt vor der Applikation nochmals geschmolzen werden.

Beispielsweise kann eine Einarbeitung und Weiterverarbeitung durch Extrusion oder Spritzguss mit 90 Gewichtsprozent Eisenpulver-Füllstoff in Polyamid-6-Schmelzkleber erfolgen. Ein solches Compound erweicht bei 120 bis 150 Grad Celsius und ist bei 230 bis 250 Grad Celsius verarbeitbar.

Ein konkretes Nutverschlussmaterial auf Thermoplastbasis kann auch mit einer Polyolefin-Matrix hergestellt werden. Die Einarbeitungstemperatur läge dann beispielsweise bei 200 Grad Celsius und es könnte ein Gewichtsverhältnis von 90:10 (Füllstoff zu Matrix) realisiert werden.

Nach der Compoundierung kann der Werkstoff z.B. in Form eines Granulats in das Applikationsgerät eingebracht und auf Verarbeitungstemperatur erhitzt werden. Beispielsweise mittels eines Einschneckenextruders oder einer geeigneten Thermoplast-Applikationspistole (Heißklebepistole) kann nun eine Raupe bei Verarbeitungstemperatur beziehungsweise leicht darüber z.B. in die Statornut eingebracht werden. Konkret kann die Raupe durch den Nutspalt auf einen Wegschieber, der ein in die Nut eingebrachtes Drahtbündel nach oben abschließt, appliziert werden. Nach der Abkühlung unter die Erweichungstemperatur ist der Nutverschluss vorzugsweise mit den Hinterschnitten der Nutspaltgeometrie verzahnt und verklebt.

Die Applikation kann beispielsweise durch ein Ablegen einer Raupe (= Compound-Paste), welche sich formschlüssig in den Nutspalt beziehungsweise auf den Deckschieber legt, realisiert werden. Dabei sollte die Raupe nach innen (bei einem Außenstator) bündig mit dem Innenradius des Blechpakets abschließen. Optional kann vor der Applikation eine kurzzeitige Kompression des Kupfer- beziehungsweise Drahtbündels erfolgen, sodass die Raupe noch im Zustand hoher Temperatur mechanisch in die Hinterschnitte gepresst wird. Dies wird anhand des folgenden Ausführungsbeispiels näher erläutert.

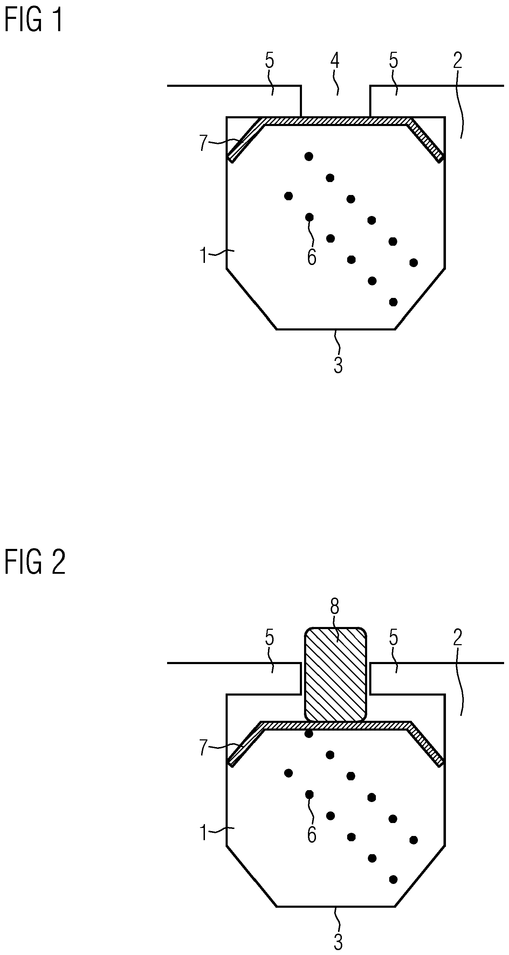

Die FIG 1 bis 4 zeigen hierzu eine Nut 1, die in einem Blechpaket 2 ausgebildet ist. Die Nut 1 besitzt einen Nutgrund 3, der beispielsweise bei einem Außenstator radial außen ausgebildet ist. Gegenüber dem Nutgrund 3 befindet sich (bei dem Außenstator radial innen) ein Nutspalt 4. Der Nutspalt 4 befindet sich in Umfangsrichtung zwischen einer oder zwei Nutvorsprüngen 5.

In der Nut 1 befindet sich ein Drahtbündel 6 einer Wicklung der elektrischen Maschine. Das Drahtbündel 6 wurde durch den Nutspalt 4 in die Nut 1 eingelegt. Ein Deckschieber 7, der sich in Längsrichtung der Nut erstreckt und mit den Nutvorsprüngen 5 einen Formschluss bildet, verhindert, dass das Drahtbündel 6 aus der Nut 1 austreten kann. Im Zustand von FIG 1 liegt der Deckschieber 7 durch das Drahtbündel 6 an den Nutvorsprüngen 5 an.

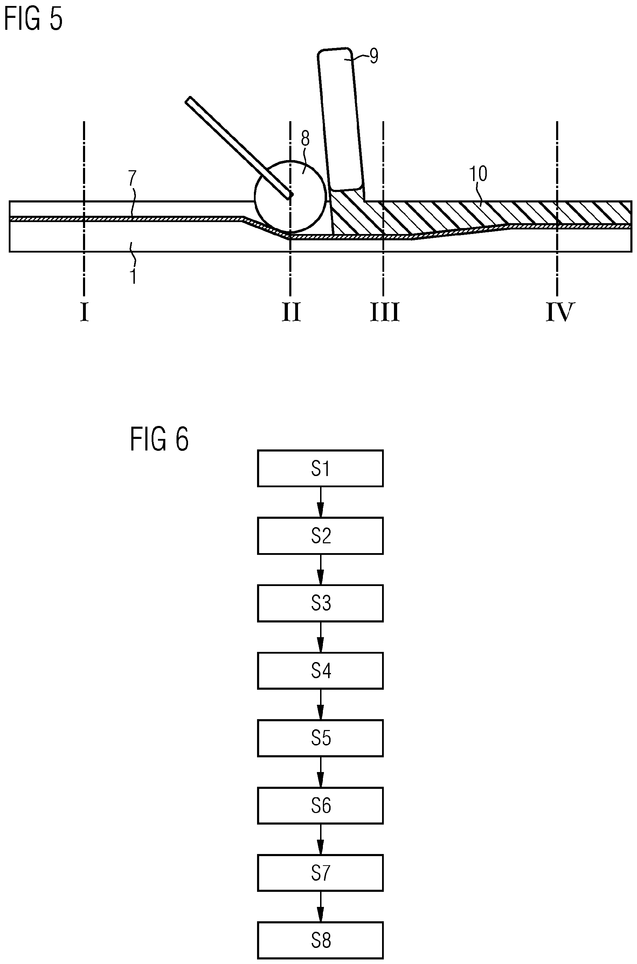

FIG 5 zeigt die Nut 1 im Längsschnitt. Eine Stelle des Querschnitts von FIG 1 vor der Applikation der Raupe/des thermoplastischen Nutverschlussmaterials ist in FIG 5 mit I bezeichnet.

FIG 2 zeigt einen Querschnitt durch die Nut 1 an der Stelle II von FIG 5. Speziell wird an dieser Stelle durch eine Drückerwalze 8 oder ein anderes geeignetes Werkzeug der Deckschieber 7 und das darunterliegende Drahtbündel 6 in Richtung Nutgrund gedrückt und somit komprimiert. Auch aus FIG 5 ist zu erkennen, dass an der Querschnittstelle II der Deckschieber 7 tiefer in die Nut 1 gedrückt ist.

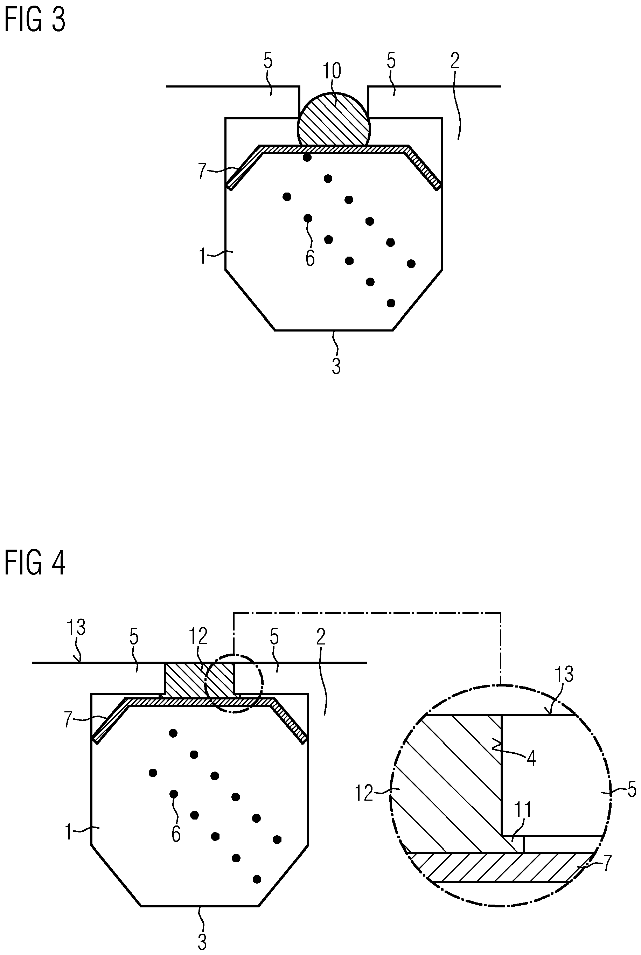

Unmittelbar anschließend an die Drückerwalze 8 wird mit einer Applikationseinrichtung 9 (z.B. Extruder oder Applikationspistole jeweils beheizbar) das geschmolzenen Nutverschlussmaterial (einschließlich thermoplastischer Kunststoffmatrix und magnetisierbaren Partikeln) als Strang beziehungsweise Raupe 10 auf das Drahtbündel 6 oder den Deckschieber 7 aufgetragen, was FIG 3 an der Querschnittstelle III zeigt. An dieser Querschnittstelle III befindet sich das Drahtbündel 6 beziehungsweise der Deckschieber 7 noch im durch die Drückerwalze 8 komprimierten Zustand, was auch die tiefe Lage des Deckschiebers 7 an der Querschnittstelle III von FIG 5 zeigt.

Die Raupe 10 kann einen kreissegmentförmigen Querschnitt besitzen. Vorzugsweise ist sie etwas breiter als der Nutspalt 4. Dies hat den Vorteil, dass durch Teile der Raupe 10, d.h. der Nutverschlussmasse, die hinter die Nutvorsprünge 5 ragen, Hinterschnitte 11 gebildet werden können, wenn sich das Drahtbündel 6 gemäß FIG 4 wieder entspannt und den Deckschieber 7 zum Nutspalt 4 drückt. Dabei füllt die noch heiße, plastische Raupe 10 den Nutspalt 4, sodass sich der in FIG 4 dargestellte Nutverschluss 12 ergibt, der einen T-förmigen Querschnitt mit den Hinterschnitten 11 besitzt.

Ein vergrößerter Abschnitt des Nutverschlusses 12 ist ebenfalls in FIG 4 dargestellt. Er zeigt, wie insbesondere der Hinterschnitt 11 des Nutverschlusses 12 unter den Nutvorsprung 5 ragt und somit bei erstarrtem, festen Nutverschlussmaterial einen Formschluss bildet.

Gegebenenfalls wird die Raupe 10 an der Oberseite 13 der Nut 1 abgezogen, damit der Nutverschluss 12 oberflächenbündig mit der Oberseite 12 wird. Für das Abziehen kann die Applikationseinrichtung 9 oder ein separates Werkzeug verwendet werden.

Aufgrund der hohen Füllung (z.B. 75 bis 90 Gewichtsprozent Eisenpulver-Füllstoff) der Schmelzkleberpaste bleibt diese formstabil in den Nuten und erkaltet und erstarrt zügig. Eine Co₂- und zeitintensive Härtung des Materials kann unterbleiben. Im Vergleich zu duromeren Lösungen ist eine Recycelbarkeit durch Wiederaufschmelzen und der Einsatz von Rezyklat gegeben.

Im Zusammenhang mit FIG 6 werden die möglichen Verfahrensschritte eines Ausführungsbeispiels näher erläutert. Nicht alle Verfahrensschritte sind zwingend notwendig. Vielmehr können einzelne Verfahrensschritte auch optional durchgeführt werden und sich auch gegebenenfalls zeitlich überlappen.

In einem ersten Schritt S1 kann thermoplastischer Kunststoff beispielsweise in Form von Granulat etwa für die Compoundierung bereitgestellt werden. In Schritt S2 wird der thermoplastische Kunststoff geschmolzen. In Schritt S3 erfolgt ein Mischen des thermoplastischen Kunststoffs mit magnetisierbaren Partikeln (insbesondere Eisenpulver). Das Mischen gemäß Schritt S3 kann vor, während und nach dem Schmelzen von Schritt S2 erfolgen.

Optional kann nun gemäß Schritt S4 das Compound zu einem festen Nutverschlussmaterial in Form etwa von Stäben oder eines Granulats erstarren. Die thermoplastischen Stäbe beziehungsweise das thermoplastische Granulat liegen somit als festes Zwischenprodukt vor.

Nun kann das feste Nutverschlussmaterial beispielsweise in einer Applikationsvorrichtung bereitgestellt werden. Beispielsweise wird ein Extruder oder eine Applikationspistole mit dem Nutverschlussmaterial beschickt.

Sodann erfolgt gemäß Schritt S6 ein Schmelzen des Nutverschlussmaterials in einer Schmelzeinrichtung beziehungsweise der Applikationseinrichtung.

Gemäß Schritt S7 wird das geschmolzene Nutverschlussmaterial mittels der Applikationseinrichtung in eine Nut einer elektrischen Maschine appliziert. Dem Applizieren kann ein in FIG 6 nicht dargestellter Schritt des Niederdrückens eines Drahtbündels in der Nut vorausgehen.

Schließlich erfolgt ein Abkühlen des Nutverschlussmaterials gemäß Schritt S8. Gegebenenfalls verklebt das thermoplastische Nutverschlussmaterial mit der Nut und dem Deckschieber und/oder bildet einen Formschluss mit der Nut.

In vorteilhafterweise kann durch ein vorgefertigtes Compound ein hoher Füllgrad von beispielsweise 75 bis 90 Gewichtsprozent erzielt werden. Als besonders vorteilhaft erweist sich eine kurzzeitige Temperaturerhöhung z.B. durch eine IR-Lampe, auf Verarbeitungstemperatur zur Glättung der Oberfläche des Nutverschlusses. Wegen des hohen Füllgrads erfolgt eine anschließende Härtung bei Raumtemperatur sehr rasch.

Weiter vorteilhaft ist, dass in dem Compound keine Faser-Armierung notwendig ist, sodass eine vollautomatisierte Applikation realisierbar ist. Die gegebenenfalls niedrige Erweichungstemperatur ist für hocheffiziente Niederspannungsmotoren durchaus akzeptabel.

Besonders vorteilhaft ist die Recyclierfähigkeit des thermoplastischen Nutverschlusses im Vergleich zu 3D vernetztem Duroplast.

## Patentansprüche

1. Verfahren zum Füllen einer Nut (1) einer elektrischen Maschine **gekennzeichnet durch**
- Bereitstellen (S5, S6) eines viskosen Nutverschlussmaterials, in dessen thermoplastische Kunststoffmatrix magnetisierbare Partikel eingemischt sind,
- Applizieren (S7) des viskosen Nutverschlussmaterials in die Nut (1) der elektrischen Maschine, und
- Abkühlen (S8) des viskosen Nutverschlussmaterials in der Nut, wodurch das Nutverschlussmaterial in der Nut (1) aushärtet.

2. Verfahren nach Anspruch 1, wobei die Kunststoffmatrix ein Polyolefin ist.

3. Verfahren nach Anspruch 1, wobei die Kunststoffmatrix ein Polyamid und insbesondere ein Polyamid-6 ist.

4. Verfahren nach einem der vorhergehenden Ansprüche, wobei in dem Nutverschlussmaterial 75 bis 90 Gewichtsprozent magnetisierbare Partikel, insbesondere Eisenpulver, eingemischt (S3) sind.

5. Verfahren nach einem der vorhergehenden Ansprüche, wobei das Applizieren (S7) des viskosen Nutverschlussmaterials in die Nut der elektrischen Maschine durch Extrudieren oder Spritzgießen erfolgt.

6. Verfahren nach einem der vorhergehenden Ansprüche, wobei das Applizieren des Nutverschlussmaterials durch einen Einschneckenextruder oder eine Applikationspistole erfolgt.

7. Verfahren nach einem der vorhergehenden Ansprüche, wobei das Nutverschlussmaterial zum Applizieren (S7) auf maximal 250°C, insbesondere auf maximal 200°C, erwärmt wird.

8. Verfahren nach einem der vorhergehenden Ansprüche, wobei das viskose Nutverschlussmaterial aus einem Granulat geschmolzen (S6) wird.

9. Verfahren nach Anspruch 8, wobei das Schmelzen (S6) des Nutverschlussmaterials unmittelbar vor dem Applizieren (S7) erfolgt.

10. Verfahren nach einem der vorhergehenden Ansprüche, wobei bei dem Applizieren (S7) des viskosen Nutverschlussmaterials in die Nut (1) der elektrischen Maschine ein viskoser Strang (10) aus dem Nutverschlussmaterial auf ein Drahtbündel (6) in der Nut (1) aufgebracht wird.

11. Verfahren nach Anspruch 10, wobei das Drahtbündel unmittelbar vor dem Applizieren (S7) des viskosen Strangs (10) in Richtung Nutgrund (3) der Nut (1) gedrückt wird.

12. Verfahren nach Anspruch 11, wobei sich nach dem Applizieren (S7) des viskosen Strangs (10) das Drahtbündel (6) in der Nut entspannt und dabei ein Teil des Strangs (10) zur Bildung eines Formschlusses hinter einen Nutvorsprung (5) der Nut (1) gedrückt wird.

13. Verfahren nach einem der vorhergehenden Ansprüche, wobei der viskose Strang (10) nach dem Einbringen in die Nut oberflächenbündig abgezogen und/oder mit einer Heizeinrichtung geglättet wird.

14. Vorrichtung zum Füllen einer Nut (1) einer elektrischen Maschine **gekennzeichnet durch**
- eine Schmelzeinrichtung ausgebildet zum Schmelzen (S2, S6) eines Nutverschlussmaterials, in dessen thermoplastische Kunststoffmatrix magnetisierbare Partikel eingemischt (S3) sind,
- eine Applikationseinrichtung ausgebildet zum Applizieren (S7) des geschmolzenen Nutverschlussmaterials in die Nut der elektrischen Maschine und zum Abkühlenlassen (S8) des geschmolzenen Nutverschlussmaterials in der Nut (1), wodurch das Nutverschlussmaterial in der Nut (1) aushärtet.
